# EUROPÄISCHE PATENTSCHRIFT

(11) **EP 2 814 852 B1**
(45) Veröffentlichungstag und Bekanntmachung des Hinweises auf die Patenterteilung: **23.01.2019**
(21) Anmeldenummer: 13705952.3
(22) Anmeldetag: 13.02.2013
(51) Int. Cl.: C08F 10/10

(54) **BORTRIFLUORID-KATALYSATORKOMPLEX UND VERFAHREN ZUR HERSTELLUNG VON HOCHREAKTIVEN ISOBUTENHO-MOPOLYMEREN**
BORON TRIFLUORIDE CATALYST COMPLEX AND METHOD FOR PRODUCING HIGHLY REACTIVE ISOBUTENE HOMOPOLYMERS
COMPLEXE CATALYSEUR AU TRIFLUORURE DE BORE ET PROCÉDÉ DE PRODUCTION D'HOMOPOLYMÈRES D'ISOBUTÈNE HAUTEMENT RÉACTIFS

(30) Priorität: 17.02.2012 EP 12155866
(43) Veröffentlichungstag der Anmeldung: 24.12.2014
(73) Patentinhaber: BASF SE, 67056 Ludwigshafen am Rhein (DE); BASF Schweiz AG, 4057 Basel (CH)
(72) Erfinder: WETTLING, Thomas, 67117 Limburgerhof (DE); HIRSCH, Stefan, 67435 Neustadt (DE); BRYM, Markus, 67117 Limburgerhof (DE); WEIS, Markus, 67354 Römerberg (DE)
(74) Vertreter: BASF IP Association
(86) Internationale Anmeldenummer: PCT/EP2013/052800
(87) Internationale Veröffentlichungsnummer: WO 2013/120859

(56) Entgegenhaltungen:
- WO-A1-2005/066222
- DE-A1- 10 028 585
- US-A1- 2006 063 901
- US-A1- 2006 122 447

## Beschreibung

Die vorliegende Erfindung betrifft einen neuen Bortrifluorid-Katalysatorkomplex sowie ein verbessertes Verfahren zur Herstellung von hochreaktiven Isobutenhomopolymeren mit einem zahlenmittleren Molekulargewicht von 300 bis 50.000 durch Polymerisation von Isobuten in flüssiger Phase in Gegenwart dieses Bortrifluorid-Katalysatorkomplexes.

Unter hochreaktiven Isobutenhomopolymeren versteht man im Unterschied zu den sogenannten niedrigreaktiven Polymeren solche Polyisobutene, die einen hohen Gehalt an terminal angeordneten ethylenischen Vinyliden-Doppelbindungen (α-Doppelbindungen) enthalten, und zwar in der Praxis meist von wenigstens 80 Mol-%, bezogen auf die einzelnen Kettenenden der Polyisobuten-Makromoleküle. Unter Vinylidengruppen werden im Sinne der vorliegenden Anmeldung solche Doppelbindungen verstanden, deren Lage im Polyisobuten-Makromolekül durch die allgemeine Formel 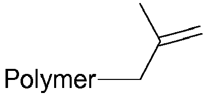 beschrieben wird, d.h. die Doppelbindung befindet sich in der Polymerkette in einer α-Stellung. "Polymer" steht für den um eine Isobuteneinheit verkürzten Polyisobutenrest. Die Vinylidengruppen zeigen die höchste Reaktivität, beispielsweise bei der thermischen Addition an sterisch anspruchsvolle Reaktionspartner wie Maleinsäureanhydrid, wohingegen eine weiter im Inneren der Makromoleküle liegende Doppelbindung in den meisten Fällen keine oder geringere Reaktivität bei Funktionalisierungsreaktionen zeigt. Hochreaktive Polyisobutene werden unter anderem als Zwischenprodukte zur Herstellung von Additiven für Schmier- und Kraftstoffe verwendet, wie dies zum Beispiel in der DE-A 27 02 604 beschrieben wird.

Derartige hochreaktive Polyisobutene sind beispielsweise nach dem Verfahren der Patentschrift DE-A 27 02 604 C2 (1) durch kationische Polymerisation von Isobuten in flüssiger Phase in Gegenwart von reinem Bortrifluorid als Katalysator erhältlich. Nachteilig hierbei ist, dass die dabei erhaltenen Polyisobutene eine relativ hohe Polydispersität aufweisen. Die Polydispersität ist ein Maß für die Molekulargewichtsverteilung der erhaltenen Polymerketten und entspricht dem Quotient aus gewichtsmittlerem Molekulargewicht M_{w} und zahlenmittlerem Molekulargewicht Mₙ (PDI = M_{w}/Mₙ).

Polyisobutene mit einem ähnlich hohen Anteil an endständigen Vinyliden-Doppelbindungen, jedoch mit einer engeren Molekulargewichtsverteilung, sind dadurch erhältlich, dass die Polymerisation in Gegenwart eines mit bestimmten sauerstoffhaltigen organischen Verbindungen wie Alkoholen oder Ethern oder Mischungen solcher Verbindungen desaktivierten Bortrifluorid-Katalysators erfolgt.

So wird in der WO 99/64482 (2) zur Herstellung hochreaktiver Polyisobutene ein Katalysatorkomplex bestehend aus Bortrifluorid sowie (a) einem primären Alkohol mit 1 bis 20 C-Atomen oder einem sekundären Alkohol mit 3 bis 20 C-Atomen oder einem Gemisch dieser Alkohole und (b) einem von tertiären Alkylgruppen freien Ether empfohlen.

In der WO 01/27172 A1 (3) wird die Isobuten-Polymersation in Gegenwart eines Bortrifluorid-Katalysatorkomplexes beschrieben, welcher mindestens eine sauerstoffhaltige Verbindung wie Wasser oder eine organische Verbindung mit bis zu 30 Kohlenstoffatomen, insbesondere einwertige sekundäre Alkohole mit 3 bis 20 C-Atomen, gegebenenfalls zusammen mit C₁- bis C₂₀-Dialkylethern, enthält.

Aus der WO 2004/029099 A1 (4) sind zur Isobuten-Polymerisation geeignete Bortrifluorid-Komplex-Katalysatoren aus Bortrifluorid, wenigstens einem tertiären Alkohol wie tert.-Butanol und wenigstens einer unter Wasser, primären Alkoholen, sekundären Alkoholen, Dialkylethern, Alkancarbonsäuren und Phenolen ausgewählten Verbindung bekannt, wobei die dritte Komponente explizit auch eine Mischung aus primären und sekundären Alkoholen sein kann.

In der WO 2004/065432 A1 (5) wird die Polymerisation von Isobuten in Gegenwart eines Bortrifluorid-Katalysators beschrieben, welcher aus Bortrifluorid, einer Komponente (L¹), die Wasser, primäres C₁- bis C₅-Alkanol und/oder sekundäres C₃- bis C₅-Alkanol sein kann, einer weiteren Komponente (L²) in Form eines Aldehyd und/oder Ketons und einer optionalen Komponente (L³) in Form eines Ethers mit wenigstens 5 Kohlenstoffatomen, eines primären oder sekundären Alkohols mit wenigstens 6 Kohlenstoffatomen oder eines tertiären Alkohols besteht.

Aus der WO 2007/006556 A1 (6) sind Bortrifluorid-Komplexkatalysatoren für die Polymerisation von Isobuten bekannt, welche als Cokatalysatoren Verbindungen mit einem abstrahierbaren Wasserstoffatom enthalten. Als Verbindungen mit einem abstrahierbaren Wasserstoffatom werden genannt: Wasser, Methanol, Ethanol, 2-Propanol, 1-Propanol, 2-Butanol, sec.-Pentanol, sec.-Hexanol, sec.-Heptanol und/oder sec.-Octanol; weiterhin sind auch Phenole und Kresole sowie tert.-Butylether und Halogenkohlenwasserstoffe geeignet. Von diesen Verbindungen werden Methanol und 2-Propanol am meisten bevorugt.

WO 2005/066222 A1 und US 2006/063901 A1 beschreiben Katalysatorsysteme zur Isobutenpolymerisation mit anderen C₄ Monomeren die aus BF₃ und Methanol und Ethylhexanol als Solubilisatoren bestehen. Solubilisatorsysteme aus primären und sekundären Alkoholen werden nicht beschrieben.

DE 100 28 585 A1 beschreibt ein Katalysatorsystem aus BF₃ und sekundären Alkoholen, jedoch keine Gemische unterschiedlicher Alkohole.

US 2006/122447 A1 beschreibt Katalysatorsysteme zur Herstellung von Polyisobuten aus BF₃ und einem tertiären Alkohol sowie einer weiteren Komponente aus Wasser, primären Alkoholen, sekundären Alkoholen, Dialkylethern, Alkancarbonsäuren und Phenolen in einem bestimmten Verhältnis. Katalysatorsysteme mit primären und sekundären Alkoholen werden nicht beschrieben.

Die Bortrifluorid-Katalysatorkomplexe des Standes der Technik weisen jedoch noch Nachteile auf, insbesondere bei Einsatz von wirtschaftlich besonders günstigen technischen C₄-Kohlen-wasserstoffströmen als Einsatzstoff. Vor allem ist der im erhaltenen Polyisobuten auftretende störende Fluorgehalt, welcher durch Einbau von Fluorid aus dem Bortrifluorid herrührt, noch zu hoch. Der Fluorgehalt lässt sich zwar durch Absenkung oder Weglassen des Anteil an primären Alkoholen im Katalysatorkomplex erniedrigen, dadurch sink jedoch meist die Katalysatoraktivität, was einen höheren Bortrifluorid-Verbrauch zur Folge hat. Durch einen höheren Bortrifluorid-Verbrauch wird die Abwasserbelastung stark erhöht.

Aufgabe der vorliegenden Erfindung war es, einen wirtschaftlich effektiveren Bortrifluorid-Katalysatorkomplex zur Verfügung zu stellen, der sowohl einen niedrigen Fluorgehalt als auch einen niedrigen Bortrifluorid-Verbrauch bei gleichbleibend guten Produkteigenschaften insbesondere auch dann gewährleistet, wenn technische C₄-Kohlenwasserstoffströme, welche noch andere C₄-Olefine als Isobuten in signifikanten Mengen enthalten, als Einsatzstoff verwendet werden.

Demgemäß wurde ein Bortrifluorid-Katalysatorkomplex zur Polymerisation von Isobuten, bestehend aus Bortrifluorid als Polymerisationskatalysator und einer Cokatalysator-Mischung aus
(A) 10 bis 90 Gew.-%, vorzugsweise 20 bis 80 Gew.-%, insbesondere 25 bis 75 Gew.-%, vor allem 30 bis 70 Gew.-%, mindestens eines einwertigen primären Alkohols mit 1 bis 20 Kohlenstoffatomen und
(B) 90 bis 10 Gew.-% , vorzugsweise 80 bis 20 Gew.-%, insbesondere 75 bis 25 Gew.-%, vor allem 70 bis 30 Gew.-%, mindestens eines einwertigen sekundären Alkohols mit 3 bis 20 Kohlenstoffatomen,
wobei das Molverhältnis von Bortrifluorid zur Summe aller Cokatalysator-Alkohole aus (A) und (B) 2 : 1 bis 1 :10 beträgt, gefunden.

Besonders günstig wirkt sich eine Mischung aus gleichen Gew.-Teilen oder annähernd gleichen Gew.-Teilen der Komponenten (A) und (B) aus, etwa aus 45 bis 55 Gew.-% (A) und 55 bis 45 Gew.-% (B).

Als Komponente (A) der Cokatalysator-Mischung kommen vorzugsweise primäre C₁- bis C₂₀-Alkanole, insbesondere primäre C₁- bis C₈-Alkanole, vor allem primäre C₁- bis C₄-Alkanole, in Betracht, die geradkettig oder verzweigt sein können. Beispiele hierfür sind Methanol, Ethanol, n-Propanol, n-Butanol, Isobutanol, n-Pentanol, n-Hexanol, n-Heptanol, n-Octanol, 2-Ethylhexanol, n-Nonanol, n-Decanol, 2-Propylheptanol, n-Undecanol, n-Dodecanol, n-Tridecanol, Isotridecanol, n-Tetradecanol, n-Hexadecanol, n-Octadecanol und n-Eicosanol. Neben derartigen primären Alkanolen können jedoch auch einwertige primäre Cycloalkylalkohole, unter den vorliegenden Reaktionsbedingungen nicht polymerisationsfähige ungesättigte einwertige primäre Alkohole sowie einwertige primäre Alkohole mit aromatischen und/oder heteroaromatischen Resten mit jeweils bis zu 20 Kohlenstoffatomen im Molekül eingesetzt werden, beispielsweise Cyclohexylmethanol, Oleylalkohol oder Benzylalkohol.

In einer bevorzugten Ausführungsform ist der mindestens eine einwertige primäre Alkohol (A) der Cokatalysator-Mischung ausgewählt aus Methanol, Ethanol, 1-Propanol und 1-Butanol.

Als Komponente (B) der Cokatalysator-Mischung kommen vorzugsweise sekundäre C₃- bis C₂₀-Alkanole, insbesondere sekundäre C₃- bis C₈-Alkanole, vor allem sekundäre C₃- bis C₄-Alkanole, in Betracht. Beispiele hierfür sind Isopropanol, 2-Butanol, sec.-Pentanol, sec.-Hexanol, sec.-Heptanol, sec.-Octanol, sec.-Nonanol, sec.-Decanol, sec.-Undecanol, sec.-Dodecanol und sec.-Tridecanol. Neben derartigen sekundären Alkanolen können jedoch auch einwertige sekundäre Cycloalkylalkohole, unter den vorliegenden Reaktionsbedingungen nicht polymerisationsfähige ungesättigte einwertige sekundäre Alkohole sowie einwertige sekundäre Alkohole mit aromatischen und/oder heteroaromatischen Resten mit jeweils bis zu 20 Kohlenstoffatomen im Molekül eingesetzt werden, beispielsweise Cyclohexanol oder 2-Phenylethanol.

In einer bevorzugten Ausführungsform ist der mindestens eine einwertige sekundäre Alkohol (A) der Cokatalysator-Mischung ausgewählt aus Isopropanol und 2-Butanol.

Der erfindungsgemäße Bortrifluorid-Katalysatorkomplex enthält neben dem als Polymerisationskatalysator wirksamen Bortrifluorid keine weitere polymerisationsaktive Katalysatorkomponente und neben der Cokatalysator-Mischung aus den Alkoholen (A) und (B) keine weitere cokatalysierende oder die Katalysatoraktivität moderierende Komponente wie beispielsweise einen tertiären Alkohol, einen Ether, einen Aldehyd, ein Keton, ein Phenol oder eine Carbonsäure. In Spuren im Reaktionsgemisch vorliegendes Wasser, etwa unter 50 Gew.-ppm, ist hierbei unerheblich.

Dieser Bortrifluorid-Katalysatorkomplex wird als erfindungsgemäße Maßnahme bei der Herstellung von hochreaktiven Isobutenhomopolymeren eingesetzt. Gegenstand der vorliegenden Anmeldung ist demzufolge auch ein Verfahren zur Herstellung von hochreaktiven Isobutenhomopolymeren mit einem zahlenmittleren Molekulargewicht von 300 bis 50.000 durch Polymerisation von Isobuten in flüssiger Phase in Gegenwart eines Polymerisationskatalysators auf Basis von Bortrifluorid, wobei als Einsatzstoff eine C₄-Kohlenwasserstoffmischung, die mindestens 20 Gew.-% Isobuten sowie in Summe mindestens 10 Gew.-% anderer C₄-Olefine enthält, welches dadurch gekennzeichnet ist, dass man als Polymerisationskatalysator den genannten Bortrifluorid-Katalysatorkomplex eingesetzt.

Unter Isobutenhomopolymeren versteht man im Rahmen der vorliegenden Erfindung solche Polymere, die bezogen auf das Polymer zu wenigstens 98 Mol-%, vorzugsweise zu wenigstens 99 Mol-% aus Isobuten aufgebaut sind.

Die eingesetzte C₄-Kohlenwasserstoffmischung enthält das Isobuten in der Regel in einer Menge von 20 bis 90 Gew.-%, insbesondere 25 bis 75 Gew.-%, vor allem 30 bis 60 Gew.-%. Die mit enthaltenen anderen C₄-Olefine - dies sind üblicherweise 1-Buten, cis-2-Buten, trans-2-Buten und/oder 1,3-Butadien - liegen in der Mischung in der Regel in einer Menge von 10 bis 70 Gew.-%, insbesondere 25 bis 65 Gew.-%, vor allem 40 bis 55 Gew.-%, vor. Daneben sind normalerweise noch gesättigte C₄-Kohlenwasserstoffe wie n-Butan und/oder Isobutan vorhanden, und zwar meist in Mengen von 5 bis 30 Gew.-%, insbesondere 10 bis 25 Gew.-%, vor allem 12 bis 20 Gew.-%. Die eingesetzte C₄-Kohlenwasserstoffmischung kann darüber hinaus noch in untergeordneten Mengen - meist im niedrig einstelligen Prozentbereich - olefinische und/oder gesättigte Kohlenwasserstoffe mit weniger oder mehr Kohlenstoffatomen als 4 enthalten, beispielsweise Propen, Propan, n-Pentan, Isopentan oder 1-Penten.

Die eingesetzte Isobuten-haltige C₄-Kohlenwasserstoffmischung kann geringe Mengen an Kontaminanten wie Wasser oder Mineralsäuren - meist im ppm-Bereich - enthalten, ohne dass es zu kritischen Ausbeute- oder Selektivitätseinbußen kommt. Es ist zweckdienlich, eine Anreicherung dieser Verunreinigungen zu vermeiden, indem man solche Schadstoffe beispielsweise durch Adsorption an feste Adsorbentien wie Aktivkohle, Molekularsiebe oder Ionenaustauscher, aus dem Isobuten-haltigen Monomerengemisch entfernt.

In einer bevorzugten Ausführungsform betreibt man das erfindungsgemäße Verfahren zur Herstellung von hochreaktiven Isobutenhomopolymeren kontinuierlich und setzt als C₄-Kohlenwasserstoffmischung einen technischen C₄-Kohlenwasserstoffstrom ausgewählt aus C₄-Raffinaten, C₄-Schnitten aus der Isobutan-Dehydrierung und C₄-Schnitten aus Steamcrackern und Fluid Catalysed Cracking-Crackern (FCC-Crackern), ein. Ein C₄-Kohlenwasserstoffstrom aus einer FCC-Raffinerieeinheit ist auch als "b/b"-Strom bekannt. Von den C₄-Raffinaten ist insbesondere Raffinat 1 geeignet. Will man einen Raffinat 2-Strom als Einsatzstoff verwenden, muss man ihn meist vorher in geeigneter Weise an Isobuten aufkonzentrieren. Weitere geeignete Isobuten-haltige technische C₄-Kohlenwasserstoffströme sind beispielsweise auch der Produktstrom einer Propylen-Isobutan-Cooxidation oder der Produktstrom aus einer Metathese-Einheit, welche in der Regel nach üblicher Aufreinigung und/oder Aufkonzentrierung eingesetzt werden. Geeignete technische C₄-Kohlenwasserstoffströme enthalten in der Regel weniger als 500 ppm, vorzugsweise weniger als 200 ppm, Butadien. Das Isobuten aus solchen technischen C₄-Kohlenwasserstoffströmen polymerisiert unter den Bedingungen der vorliegenden Erfindung weitgehend selektiv zum gewünschten Isobutenhomopolymer, ohne dass nennenswerte Mengen anderer C₄-Monomerer in die Polymerkette eingebaut werden.

Typischerweise liegt die Isobutenkonzentration in den genannten technischen C₄-Kohlenwasserstoffströmen im Bereich von 30 bis 60 Gew.-%. So besteht Raffinat 1 in der Regel im Wesentlichen aus 30 bis 50 Gew.-% Isobuten, 10 bis 50 Gew.-% 1-Buten, 10 bis 40 Gew.-% cis- und trans-2-Buten sowie 2 bis 35 Gew.-% Butanen. Das erfindungsgemäße Verfahren kann im Prinzip jedoch auch mit Isobuten-haltigen technischen C₄-Kohlenwasserstoffströmen betrieben werden, die weniger Isobuten enthalten, beispielsweise nur 10 bis weniger als 30 Gew.-%. Das Bortrifluorid und die Cokatalysator-Mischung aus (A) und (B) können vorgemischt werden und bereits als aktionsbereiter Komplex in den Polymerisationsreaktor gegeben werden. Alternativ können jedoch das Bortrifluorid (gasförmig, flüssig oder in einem inerten Lösungs- oder Verdünnungsmittel) und die Cokatalysator-Mischung bzw. die einzelnen Alkohole (A) und (B) auch separat dem Polymerisationsmedium zugeführt werden. Wesentlich ist jedoch, dass der erfindungsgemäße Bortrifluorid-Katalysatorkomplex im Wesentlichen fertig ausgebildet vorliegt, bevor er in Kontakt mit dem zu polymerisierenden Isobuten kommt. Werden das Bortrifluorid und die Alkohole (A) und (B) gleichzeitig in das Polymerisationsmedium, das schon die Isobuten enthaltende C₄-Kohlenwasserstoffmischung enthält, eingeleitet, lagern sich die Alkohole schneller an das Bortrifluorid an als die Polymerisation eingeleitet wird oder fortschreitet, so dass nicht das nackte Bortrifluorid sondern ausschließlich oder nahezu ausschließlich der erfindungsgemäße Bortrifluorid-Katalysatorkomplex wirkt.

Die zu verwendende Menge an Polymerisationskatalysator richtet sich im Wesentlichen nach der Art des Cokatalysators und nach den Reaktionsbedingungen, insbesondere der Reaktionstemperatur und dem angestrebten Molekulargewicht des Polymeren. Sie kann anhand weniger Stichversuche für das jeweilige Reaktionssystem ermittelt werden. Im Allgemeinen wird der Polymerisationskatalysator in Mengen von 0,0001 bis 1 Gew.-%, insbesondere 0,0005 bis 0,5 Gew.-%, vor allem 0,001 bis 0,1 Gew.-%, jeweils bezogen auf den Bortrifluorid-Anteil im Katalysatorkomplex und auf eingesetztes Isobuten, verwendet.

Die Cokatalysator-Mischung aus (A) und (B) kann in unterstöchiometrischer, stöchiometrischer oder überstöchiometrischer Menge in Relation zum Bortrifluorid eingesetzt werden. Das typische Molverhältnis von Bortrifluorid zur Cokatalysator-Mischung, also zur Summe aller Cokatalysator-Alkohole aus (A) und (B), liegt im Bereich von 2 : 1 bis 1 : 10, vorzugsweise von 1,5 : 1 bis 1 : 5, insbesondere von 1,25 : 1 bis 1 : 2, vor allem von 1 : 1 bis 1 : 1,5. Die Menge an Cokatalysator-Mischung kann Einfluss auf die Einstellung des zu erzielenden Molekulargewichtes des Isobutenhomopolymeren haben und damit zur gezielten Einstellung seines Molekulargewichtes dienen.

Die Polymerisation kann sowohl diskontinuierlich als auch vorzugsweise kontinuierlich erfolgen. Das erfindungsgemäße Verfahren zur Herstellung von hochreaktiven Isobutenhomopolymeren ist prinzipiell sowohl für eine Durchführung bei niedrigen Temperaturen, z. B. bei -90°C bis 0 °C, als auch bei höheren Temperaturen, d.h. bei wenigstens 0°C, z. B. bei 0°C bis +50°C, geeignet. Die Polymerisation gemäß dem erfindungsgemäßen Verfahren wird vorzugsweise jedoch bei Temperaturen im Bereich von -60°C bis +40°C, insbesondere von -40°C bis +20°C, vor allem von -25°C bis 0°C, durchgeführt.

Die Polymerisation wird in der Regel bei einem Druck von 700 mbar bis 20 bar, insbesondere bei einem Druck von 1 bar bis 10 bar, vor allem bei einem Druck von 1,2 bar bis 7 bar, durchgeführt. Ein Überdruck bringt normalerweise bei der verwendeten C₄-Kohlenwasserstoffmischung und bei einigen gegebenenfalls mitverwendeten inerten Verdünnungsmitteln Vorteile.

Als Polymerisationsreaktor für das erfindungsgemäße Verfahren können im Prinzip alle für derartige Flüssigphasen-Polymerisationen geeigneten diskontinuierlich oder kontinuierlich betriebenen Reaktortypen verwendet werden, beispielsweise Rührkessel, Rührkesselkaskaden, Rohrreaktoren oder Schlaufenreaktoren. Erfolgt die Polymerisation gemäß dem erfindungsgemäßen Verfahren bei oder oberhalb der Siedetemperatur von gegebenenfalls mitverwendeten inerten Verdünnungsmitteln oder des zu polymerisierenden Monomers, so wird sie vorzugsweise in Druckgefäßen, beispielsweise in Autoklaven oder in Druckreaktoren, durchgeführt.

Die Polymerisation gemäß dem erfindungsgemäßen Verfahren kann in Gegenwart eines inerten Verdünnungsmittels durchgeführt werden. Das verwendete inerte Verdünnungsmittel sollte geeignet sein, die während der Polymerisationsreaktion in der Regel auftretende Erhöhung der Viskosität der Reaktionslösung soweit zu verringern, dass die Abführung der entstehenden Reaktionswärme gewährleistet werden kann. Als Verdünnungsmittel sind solche Lösungsmittel oder Lösungsmittelgemische geeignet, die gegenüber den eingesetzten Reagenzien inert sind. Geeignete Verdünnungsmittel sind beispielsweise aliphatische Kohlenwasserstoffe wie n-Butan, n-Pentan, n-Hexan, n-Heptan, n-Octan und Isooctan, cycloaliphatische Kohlenwasserstoffe wie Cyclopentan und Cyclohexan, aromatische Kohlenwasserstoffe wie Benzol, Toluol und die Xylole, und halogenierte Kohlenwasserstoffe, insbesondere halogenierte aliphatische Kohlenwasserstoffe wie Methylchlorid, Dichlormethan, Trichlormethan (Chloroform), 1,1-Dichlorethan, 1,2-Dichlorethan, Trichlorethan und 1-Chlorbutan sowie halogenierte aromatische Kohlenwasserstoffe und in den Alkylseitenketten halogenierte Alkylaromaten wie Chlorbenzol, Monofluormethylbenzol, Difluormethylbenzol und Trifluormethylbenzol, sowie Mischungen der vorgenannten Verdünnungsmittel. Zweckmäßigerweise werden die Verdünnungsmittel vor ihrem Einsatz von Verunreinigungen wie Wasser oder Mineralsäuren befreit, beispielsweise durch Adsorption an feste Adsorbentien wie Aktivkohle, Molekularsiebe oder Ionenaustauscher. Als Verdünnungsmittel oder als Bestandteile der genannten Lösungsmittelgemische fungieren natürlich auch die inerten Anteile der als Einsatzstoff verwendeten Isobuten-haltigen C₄-Kohlenwasserstoffmischung.

Vorzugsweise wird die Polymerisation gemäß dem erfindungsgemäßen Verfahren unter weitgehend aprotischen, insbesondere unter weitgehend wasserfreien Reaktionsbedingungen durchgeführt. Unter weitgehend aprotischen beziehungsweise weitgehend wasserfreien Reaktionsbedingungen versteht man, dass der Wassergehalt (bzw. der Gehalt an protischen Verunreinigungen) im Reaktionsgemisch weniger als 50 Gew.-ppm und insbesondere weniger als 5 Gew.-ppm beträgt. In der Regel wird man daher den Einsatzstoff vor seiner Verwendung durch physikalische und/oder durch chemische Maßnahmen trocknen. Insbesondere hat es sich bewährt, als Verdünnungsmittel eingesetzte aliphatische oder cycloaliphatische Kohlenwasserstoffe nach üblicher Vorreinigung und Vortrocknung mit einer metallorganischen Verbindung, beispielsweise einer Organolithium-, Organomagnesium- oder Organoaluminium-Verbindung, in einer Menge zu versetzen, die ausreicht, um die Wasserspuren aus dem Lösungsmittel weitgehend zu entfernen. Das so behandelte Lösungsmittel wird dann vorzugsweise direkt in das Reaktionsgefäß einkondensiert. In ähnlicher Weise kann man auch mit der Isobuten-haltigen C₄-Kohlenwasserstoffmischung verfahren. Auch die Trocknung mit anderen üblichen Trockenmitteln wie Molekularsieben oder vorgetrockneten Oxiden wie Aluminiumoxid, Siliciumdioxid, Calciumoxid oder Bariumoxid, ist geeignet. Die halogenierten Lösungsmittel, für die eine Trocknung mit Metallen wie Natrium oder Kalium oder mit Metallalkylen nicht in Betracht kommt, werden mit dafür geeigneten Trocknungsmitteln, beispielsweise mit Calciumchlorid, Phosphorpentoxid oder Molekularsieb, von Wasser oder Wasserspuren befreit.

Zum Reaktionsabbruch wird das Reaktionsgemisch vorzugsweise desaktiviert, beispielsweise durch Zugabe ausreichender Mengen einer protischen Verbindung, insbesondere durch Zugabe von Wasser, Alkoholen wie Methanol, Ethanol, n-Propanol und Isopropanol oder deren Gemische mit Wasser, oder durch Zugabe einer wässrigen Base, z. B. einer wässrigen Lösung eines Alkali- oder Erdalkalihydroxids wie Natriumhydroxid, Kaliumhydroxid, Magnesiumhydroxid oder Calciumhydroxid, eines Alkali- oder Erdalkalicarbonats wie Natrium-, Kalium-, Magnesium- oder Calciumcarbonat, oder eines Alkali- oder Erdalkalihydrogencarbonats wie Natrium-, Kalium-, Magnesium- oder Calciumhydrogencarbonat.

Das erfindungsgemäße Verfahren dient zur Herstellung von hochreaktiven Isobutenhomopolymeren mit einem Gehalt an terminalen Vinyliden-Doppelbindungen (α-Doppelbindungen) pro Polyisobuten-Kettenende von vorzugsweise mindestens 50 Mol-%, insbesondere von mindestens 60 Mol-%, besonders bevorzugt von mindestens 70 Mol-%, vor allem von mindestens 75 Mol-%.

Üblicherweise weisen die mit dem erfindungsgemäßen Verfahren hergestellten hochreaktiven Isobutenhomopolymere eine Polydispersität (PDI = M_{w}/Mₙ) von 1,05 bis als 3,5, vorzugsweise von 1,05 bis 2,5, insbesondere von 1,05 bis 2,0 und vor allem von 1,1 bis 1,85 auf. Typische Werte für PDI liegen bei optimaler Verfahrensführung bei 1,2 bis 1,7.

Typischerweise besitzen die mit dem erfindungsgemäßen Verfahren hergestellten hochreaktiven Isobutenhomopolymere ein zahlenmittleres Molekulargewicht Mₙ (bestimmt durch Gelpermeationschromatographie) von 300 bis 50.000, vorzugsweise von 500 bis 10.000, insbesondere von 600 bis 5000, vor allem von 700 bis 2500, beispielsweise von 950 bis 1050 oder von 2200 bis 2400.

Die im Sinne der vorliegenden Erfindung verwendete Mischung aus den Alkoholkomponenten (A) und (B) liefert Vorteile gegenüber dem Einsatz einer gleichen molaren Menge des reinen primären Alkohols (A) oder des reinen sekundären Alkohols (B). Die auftretenden Effekte können als synergistisch angesprochen werden. Die Verwendung der Mischung aus (A) und (B) als Cokatalysator-System für das Bortrifluorid gewährleistet sowohl einen niedrigen Fluorgehalt im Polymer als auch einen niedrigen Bortrifluorid-Verbrauch bei gleichbleibend guten Produkteigenschaften des erzeugten Polyisobutens, insbesondere dann, wenn C₄-Kohlenwasserstoff-Mischungen oder technische C₄-Kohlenwasserstoffströme, welche noch andere C₄-Olefine als Isobuten in signifikanten Mengen enthalten, als Einsatzstoff verwendet werden.

Die nachfolgenden Beispiele sollen die vorliegende Erfindung erläutern, ohne sie zu beschränken.

### Beispiele

Die nachfolgenden Beispiele wurden in einer kontinuierlichen Polymerisationsapparatur aus einem mantelgekühlten Reaktor mit einem Volumen von 800 ml und einem mechanischen Rührer, einem Rohstoffeintragsrohr mit Vorkühlung des eingesetzten C₄-Kohlenwasserstoffstroms, einem Einleitrohr für gasförmiges Bortrifluorid, einem Tropftrichter für den eingesetzten Alkohol bzw. die eingesetzte Alkoholmischung und einem Ansaugstutzen für den kontinuierlichen Austrag des Reaktorinhaltes durchgeführt. Die Polymerisation wurde bei einer konstanten Reaktorinnentemperatur von -17°C durchgeführt. Die Durchflussmenge (= Einsatzstoffeintragsmenge = Rohproduktaustragsmenge) betrug 9 l/h.

Die Zusammensetzung des als Einsatzstoff verwendeten C₄-Kohlenwasserstoffstroms, die typisch für einen Raffinat 1-Strom ist, war folgende:

| | |
|---|---|
| Isobuten | 39,3 Gew.-% |
| 1-Buten | 32,2 Gew.-% |
| trans-2-Buten | 8,4 Gew.-% |
| cis-2-Buten | 5,8 Gew.-% |
| Isobutan | 4,1 Gew.-% |
| n-Butan | 10,2 Gew.-% |
| 1,3-Butadien | 285 Gew.-ppm |

Zur Aufarbeitung wurde der noch kalte Reaktoraustrag mit einem Überschuss an 70°C heißem, demineralisiertem Wasser behandelt und intensiv gemischt. Die Menge des heißen Wassers wurde dabei so gewählt, dass die Mischtemperatur beider Phasen ca. 20°C betrug. Dabei verdampfte bereits ein Teil der flüchtigen organischen Verbindungen.

Nach mindestens 20 Minuten Verweilzeit wurde die obere (organische) Phase abgetrennt und Produktproben für die Analyse des organischen Fluorgehalts im Polymer sowie des zahlenmittleren Molgewichtes (Mₙ) und des Gehaltes an alpha-ständigen terminalen Vinyliden-Doppelbindungen ("alpha") des Polymers in einem Rotationsverdampfer im Vakuum von den restlichen organischen Verbindungen befreit (Ölbadtemperatur: 150°C bei 30 mbar für 30 Minuten).

Die nachfolgende Tabelle gibt die jeweilige Einsatzmenge an Alkohol bzw. Alkoholmischung und die jeweils benötigte Menge an Bortrifluorid sowie die analytischen Daten der jeweils erhaltenen Produkte an (Beispiele Nr. 1 und 2 dienen zum Vergleich):

| Bsp. Nr. | Alkoholmischung [Gew.-%:Gew.-%] | Menge Alkohol | BF₃-Menge | Fluorgehalt [Gew.-ppm] | Mₙ | alpha [Mol-%] |
|---|---|---|---|---|---|---|
| 1 | reines MeOH | 6 g/h | 7 g/h | 143 | 988 | 71 |
| 2 | reines IPOH | 12 g/h | 23 g/h | 50 | 1003 | 69 |
| | | | | | | |
| 3 | MeOH:IPOH=50:50 | 8 g/h | 8 g/h | 73 | 966 | 73 |
| 4 | MeOH:IPOH=30:70 | 11 g/h | 13 g/h | 61 | 991 | 71 |
| 5 | MeOH:IPOH=70:30 | 7 g/h | 7 g/h | 87 | 967 | 70 |
| | | | | | | |
| 6 | MeOH:2BOH=50:50 | 10 g/h | 11 g/h | 69 | 1009 | 76 |

| | | | | | | |
|---|---|---|---|---|---|---|
| MeOH = Methanol, IPOH = Isopropanol, 2BOH = 2-Butanol | | | | | | |

## Patentansprüche

1. Bortrifluorid-Katalysatorkomplex zur Polymerisation von Isobuten, bestehend aus Bortrifluorid als Polymerisationskatalysator und einer Cokatalysator-Mischung aus
(A) 10 bis 90 Gew.-% mindestens eines einwertigen primären Alkohols mit 1 bis 20 Kohlenstoffatomen und
(B) 90 bis 10 Gew.-% mindestens eines einwertigen sekundären Alkohols mit 3 bis 20 Kohlenstoffatomen,
wobei das Molverhältnis von Bortrifluorid zur Summe aller Cokatalysator-Alkohole aus (A) und (B) 2 : 1 bis 1 :10 beträgt.

2. Bortrifluorid-Katalysatorkomplex nach Anspruch 1, bei dem der mindestens eine einwertige primäre Alkohol (A) aus Methanol, Ethanol, 1-Propanol und 1-Butanol ausgewählt ist.

3. Bortrifluorid-Katalysatorkomplex nach Anspruch 1 oder 2, bei dem der mindestens eine einwertige sekundäre Alkohol (B) aus Isopropanol und 2-Butanol ausgewählt ist.

4. Verfahren zur Herstellung von hochreaktiven Isobutenhomopolymeren mit einem zahlenmittleren Molekulargewicht von 300 bis 50.000 durch Polymerisation von Isobuten in flüssiger Phase in Gegenwart eines Polymerisationskatalysators auf Basis von Bortrifluorid, wobei als Einsatzstoff eine C₄-Kohlenwasserstoffmischung, die mindestens 20 Gew.-% Isobuten sowie in Summe mindestens 10 Gew.-% anderer C₄-Olefine enthält, **dadurch gekennzeichnet, dass** man als Polymerisationskatalysator einen Bortrifluorid-Katalysatorkomplex gemäß den Ansprüchen 1 bis 3 einsetzt.

5. Verfahren zur Herstellung von Isobutenhomopolymeren nach Anspruch 4, **dadurch gekennzeichnet, dass** man das Verfahren kontinuierlich betreibt und als Einsatzstoff einen technischen C₄-Kohlenwasserstoffstrom ausgewählt aus C₄-Raffinaten, C₄-Schnitten aus der Isobutan-Dehydrierung und C₄-Schnitten aus Steamcrackern und Fluid Catalysed Cracking-Crackern einsetzt.

6. Verfahren zur Herstellung von Isobutenhomopolymeren nach Anspruch 4 oder 5, **dadurch gekennzeichnet, dass** man die Polymerisation bei Temperaturen im Bereich von -60°C bis +40°C durchführt.

7. Verfahren nach den Ansprüchen 4 bis 6 zur Herstellung von Isobutenhomopolymeren mit einem Gehalt an terminalen Vinyliden-Doppelbindungen von mindestens 50 Mol-%.

## Claims

1. A boron trifluoride-catalyst complex for polymerization of isobutene, consisting of boron trifluoride as a polymerization catalyst and a cocatalyst mixture of
(A) 10 to 90% by weight of at least one monohydric primary alcohol having 1 to 20 carbon atoms and
(B) 90 to 10% by weight of at least one monohydric secondary alcohol having 3 to 20 carbon atoms,
where the molar ratio of boron trifluoride to the sum of all cocatalyst alcohols from (A) and (B) is 2 :1 to 1:10.

2. The boron trifluoride-catalyst complex according to claim 1, in which the at least one monohydric primary alcohol (A) is selected from methanol, ethanol, 1-propanol and 1-butanol.

3. The boron trifluoride-catalyst complex according to claim 1 or 2, in which the at least one monohydric secondary alcohol (B) is selected from isopropanol and 2-butanol.

4. A process for preparing high-reactivity isobutene homopolymers having a number-average molecular weight of 300 to 50 000 by polymerizing isobutene in the liquid phase in the presence of a polymerization catalyst based on boron trifluoride, where as a feedstock a C₄ hydrocarbon mixture comprising at least 20% by weight of isobutene and a total of at least 10% by weight of other C₄-olefins, which comprises using, as the polymerization catalyst, a boron trifluoride-catalyst complex according to claims 1 to 3.

5. The process for preparing isobutene homopolymers according to claim 4, wherein the process is operated continuously and the feedstock used is a technical C₄ hydrocarbon stream selected from C₄ raffinates, C₄ cuts from isobutane dehydrogenation, and C₄ cuts from steamcrackers and fluid catalyzed crackers.

6. The process for preparing isobutene homopolymers according to claim 4 or 5, wherein the polymerization is performed at temperatures in the range from -60°C to +40°C.

7. The process according to claims 4 to 6 for preparation of isobutene homopolymers having a content of terminal vinylidene double bonds of at least 50 mol%.

## Revendications

1. Complexe catalytique de trifluorure de bore pour la polymérisation d'isobutène, constitué par du trifluorure de bore en tant que catalyseur de polymérisation et un mélange de co-catalyseurs constitué par :
(A) 10 à 90 % en poids d'au moins un alcool primaire monovalent de 1 à 20 atomes de carbone, et
(B) 90 à 10 % en poids d'au moins un alcool secondaire monovalent de 3 à 20 atomes de carbone,
le rapport molaire entre le trifluorure de bore et la somme de tous les alcools co-catalyseurs de (A) et (B) étant de 2:1 à 1:10.

2. Complexe catalytique de trifluorure de bore selon la revendication 1, dans lequel ledit au moins un alcool primaire monovalent (A) est choisi parmi le méthanol, l'éthanol, le 1-propanol et le 1-butanol.

3. Complexe catalytique de trifluorure de bore selon la revendication 1 ou 2, dans lequel ledit au moins un alcool secondaire monovalent (B) est choisi parmi l'isopropanol et le 2-butanol.

4. Procédé de fabrication d'homopolymères d'isobutène hautement réactifs ayant un poids moléculaire moyen en nombre de 300 à 50 000 par polymérisation d'isobutène en phase liquide en présence d'un catalyseur de polymérisation à base de trifluorure de bore, un mélange d'hydrocarbures en C₄ qui contient au moins 20 % en poids d'isobutène, ainsi qu'au total au moins 10 % en poids d'autres oléfines en C₄, en tant que matière première, **caractérisé en ce qu'**un complexe catalytique de trifluorure de bore selon les revendications 1 à 3 est utilisé en tant que catalyseur de polymérisation.

5. Procédé de fabrication d'homopolymères d'isobutène selon la revendication 4, **caractérisé en ce que** le procédé est exploité en continu et un courant d'hydrocarbures en C₄ technique choisi parmi les raffinats en C₄, les coupes en C₄ issues de la déshydrogénation d'isobutane et les coupes en C₄ issues de vapocraqueurs et de craqueurs de craquage catalytique fluide est utilisé en tant que matière première.

6. Procédé de fabrication d'homopolymères d'isobutène selon la revendication 4 ou 5, **caractérisé en ce que** la polymérisation est réalisée à des températures dans la plage allant de -60 °C à +40 °C.

7. Procédé selon les revendications 4 à 6 pour la fabrication d'homopolymères d'isobutène ayant une teneur en doubles liaisons vinylidène terminales d'au moins 50 % en moles.
